(19) Europäisches Patentamt
European Patent Office
Office européen des brevets

(11) EP 2 508 967 A2

(12) **EUROPEAN PATENT APPLICATION**

(43) Date of publication:
**10.10.2012 Bulletin 2012/41**

(51) Int Cl.:
***G06F 3/044*** (2006.01)

(21) Application number: **12001993.0**

(22) Date of filing: **21.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.04.2011 TW 11112291
26.09.2011 TW 11134553
16.12.2011 TW 11146839**

(71) Applicant: **eTurboTouch Technology Inc.
JhongLi City, Taoyuan County (TW)**

(72) Inventors:
• **Wang, Kuei-Ching
Longtan Township
Taoyuan County (TW)**
• **Hsieh, Yu-Heng
Taipei City (TW)**
• **Lin, Ta-Hu
Taipei City (TW)**
• **Liu, Tung-Hsin
Taichung City (TW)**

(74) Representative: **Görz, Ingo
Hoefer & Partner
Patentanwälte
Pilgersheimer Strasse 20
81543 München (DE)**

(54) **Touch panel capable of decreasing response time and reducing interference**

(57)     A touch panel (200, 200A, 500, 500A, 600, 600A) capable of decreasing response time includes a first substrate (210, 210A), a second substrate (220, 220A), and a spacer (232). The first substrate (210, 210A) has a plurality of first conductive stripes (212, 212A) formed on a lower surface of the first substrate (210, 210A) along a first direction. The second substrate (220, 220A) is disposed below the first substrate (210, 210A).

The second substrate (220, 220A) has a plurality of second conductive stripes (222, 222A) formed on an upper surface of the second substrate (220, 220A) along a second direction. The spacer (230) is arranged between the first substrate (210, 210A) and the second substrate (220, 220A) for forming a gap (232) between the first substrate (210, 210A) and the second substrate (220, 220A).

FIG. 2

EP 2 508 967 A2

**Description**

Field of the Invention

The present invention is related to a touch panel capable of decreasing response time and reducing interference according to the pre-characterizing clauses of claim 1.

Background of the Invention

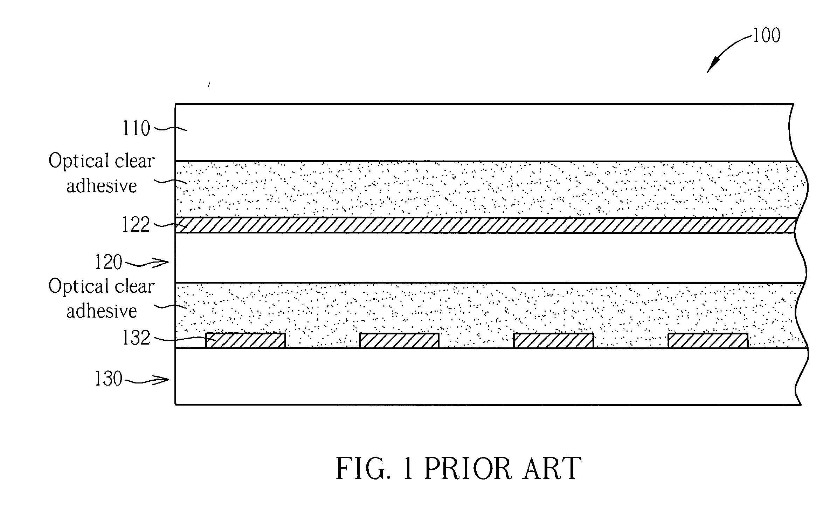

Please refer to FIG. 1. FIG. 1 is a diagram showing a capacitive touch panel 100 of the prior art. As shown in FIG. 1, the capacitive touch panel 100 comprises a protective substrate 110, a first substrate 120, and a second substrate 130. The protective substrate 110 is for protecting the capacitive touch panel 100. The first substrate 120 has a plurality of first conductive stripes 122 formed on a surface of the first substrate 120 along a first direction. The second substrate 130 has a plurality of second conductive stripes 132 formed on a surface of the second substrate 130 along a second direction. The first direction is perpendicular to the second direction. The protective substrate 110 can be a glass substrate or an acrylic substrate. The first substrate 120 and the second substrate 130 can be plastic films or glass plates. The protective substrate 110, the first substrate 120 and the second substrate 130 are bonded to each other by optical clear adhesive. When the capacitive touch panel 100 is touched, a capacitance value between the first conductive stripes 122 along the first direction and the second conductive stripes 132 along the second direction at a touched position is changed due to static electricity of the human body. And the touched position of the capacitive touch panel 100 can be further detected according to the changed capacitance. The capacitance between the conductive stripes 122 and 132 can be determined according to the following equation:

$$C = \varepsilon_0 \times \varepsilon_s \times A/d \qquad (1)$$

where C is the capacitance, $\varepsilon_0$ is the vacuum permittivity, $\varepsilon_s$ is a dielectric constant of an insulator between the conductive stripes 122 and 132, A is an area of the touched position, and d is a distance between the conductive stripes 122 and 132. In addition, a response time of the capacitive touch panel 100 when being touched can be determined according to the following equation:

$$t = R \times C \qquad (2)$$

where t is the response time, and R is an equivalent resistance.

According to the above equation (1) and equation (2), the capacitance between the first conductive stripes 122 along the first direction and the second conductive stripes 132 along the second direction is larger, since a dielectric constant of a layer of optical clear adhesive and a plastic film, which are inserted between the conductive stripes 122 and 132, is larger than a dielectric constant of gas. Therefore, the capacitive touch panel 100 of the prior art has longer response time.

Summary of the Invention

This in mind, the present invention aims at providing a touch panel capable of decreasing response time and reducing interference.

This is achieved by a touch panel according to claim 1.

The dependent claims pertain to corresponding further developments and improvements.

As will be seen more clearly from the detailed description following below, the claimed touch panel capable of decreasing response time and reducing interference includes a first substrate, a second substrate, and a spacer. The first substrate has a plurality of first conductive stripes formed on a lower surface of the first substrate along a first direction. The second substrate is disposed below the first substrate. The second substrate has a plurality of second conductive stripes formed on an upper surface of the second substrate along a second direction. The spacer is arranged between the first substrate and the second substrate for forming a gap between the first substrate and the second substrate.

Brief Description of the Drawings

In the following, the invention is further illustrated by way of example, taking reference to the accompanying drawings. Thereof

FIG. 1 is a diagram showing a capacitive touch panel of the prior art.
FIG. 2 is a diagram showing a capacitive touch panel of the present invention.
FIG. 3 is a diagram showing an arrangement of the spacer of the present invention.
FIG. 4 is a diagram showing another capacitive touch panel of the present invention.
FIG. 5 is a diagram showing another capacitive touch panel of the present invention.
FIG. 6 is a diagram showing another embodiment of a capacitive touch panel of the present invention corresponding to FIG. 2.
FIG. 7 is a diagram showing another embodiment of a capacitive touch panel of the present invention corresponding to FIG. 4.
FIG. 8 is a diagram showing another embodiment of a capacitive touch panel of the present invention corresponding to FIG. 5.

Detailed Description

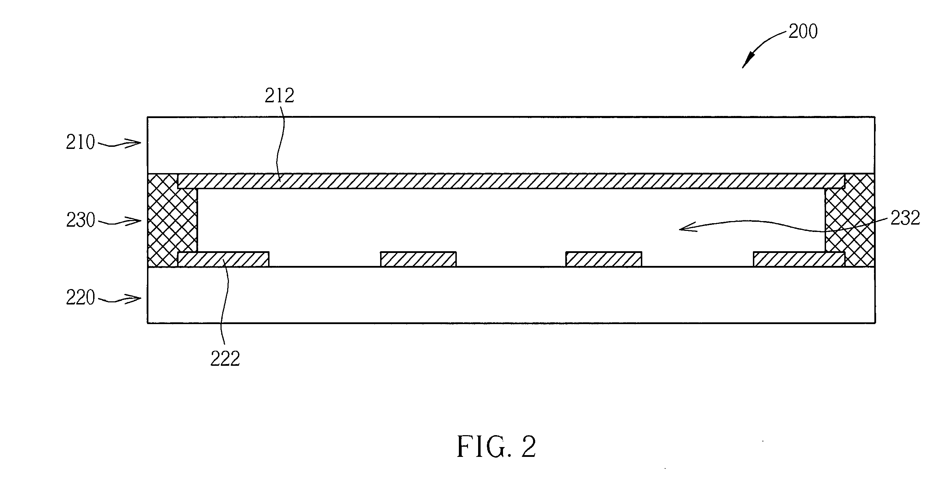

Please refer to FIG. 2, which shows a diagram of a capacitive touch panel 200 of the present invention. As shown in FIG. 2, the capacitive touch panel 200 of the present invention comprises a first substrate 210, a second substrate 220, and a spacer 230. The first substrate 210 has a plurality of first conductive stripes 212 formed on a lower surface of the first substrate 210 along a first direction. The second substrate 220 is disposed below the first substrate 210. The second substrate 220 has a plurality of second conductive stripes 222 formed on an upper surface of the second substrate 220 along a second direction. The first direction can be perpendicular to the second direction. The spacer 230 is arranged between the first substrate 210 and the second substrate 220 for forming a gap 232 between the first substrate 210 and the second substrate 220 in order to prevent conduction between the conductive stripes 212 and 222. Because the space between the first substrate 210 and the second substrate 220 is full of gas, and the dielectric constant of the gas is lower than the dielectric constant of the layer of optical clear adhesive and the plastic film, the response time of the capacitive touch panel 200 of the present invention is shorter than the response time of the capacitive touch panel 100 of the prior art according to the equation (1) and equation (2). In addition, the capacitive touch panel of the present invention can further reduce usage of the optical clear adhesive, save cost, and improve manufacturing processes and production yield rate.

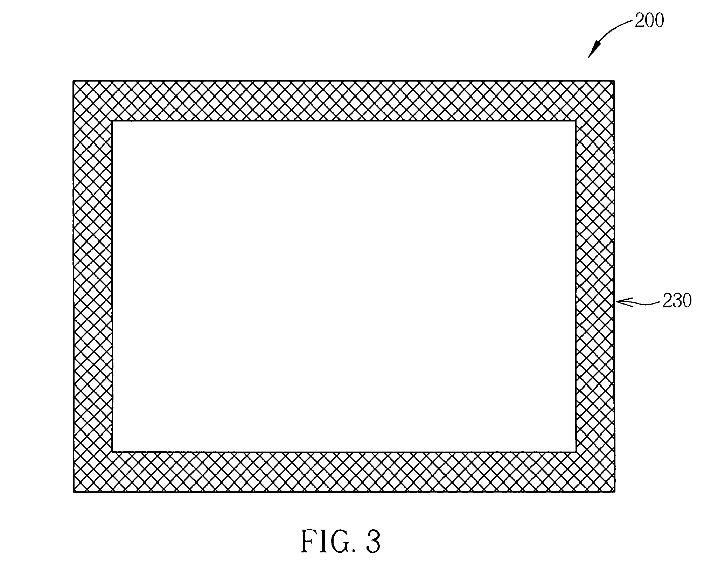

Please refer to FIG. 3, and refer to FIG. 2 as well. FIG. 3 is a diagram showing an arrangement of the spacer 230 of the present invention. The spacer 230 is arranged in edges of the capacitive touch panel as a supporting structure between the first substrate 210 and the second substrate 220, in order to form the gap 232 between the first substrate 210 and the second substrate 220. As shown in FIG. 3, the spacer 230 encloses the capacitive touch panel 200 along the edges of the capacitive touch panel 200.

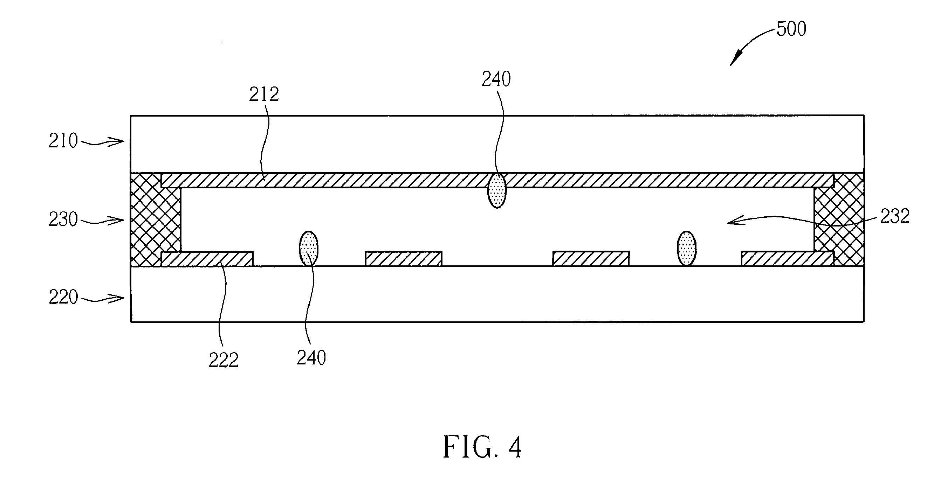

Please refer to FIG. 4, which shows a diagram of another capacitive touch panel 500 of the present invention. As shown in FIG. 4, the capacitive touch panel 500 comprises the first substrate 210, the second substrate 220, the spacer 230, and a plurality of spacing dots 240. The first substrate 210 has a plurality of first conductive stripes 212 formed on the lower surface of the first substrate 210 along the first direction. The second substrate 220 is disposed below the first substrate 210. The second substrate 220 has a plurality of second conductive stripes 222 formed on the upper surface of the second substrate 220 along the second direction. The spacer 230 is arranged between the first substrate 210 and the second substrate 220 in order to form a gap 232 between the first substrate 210 and the second substrate 220. And, the plurality of spacing dots 240 can be arranged in an inner side of the spacer 230 in order to prevent conduction between the conductive stripes 212 and 222. The spacing dot 240 can be arranged on the lower surface of the first substrate 210, on the upper surface of the second substrate 220, or on both the lower surface of the first substrate 210 and the upper surface of the second substrate 220. The spacing dot 240 can be in any shape.

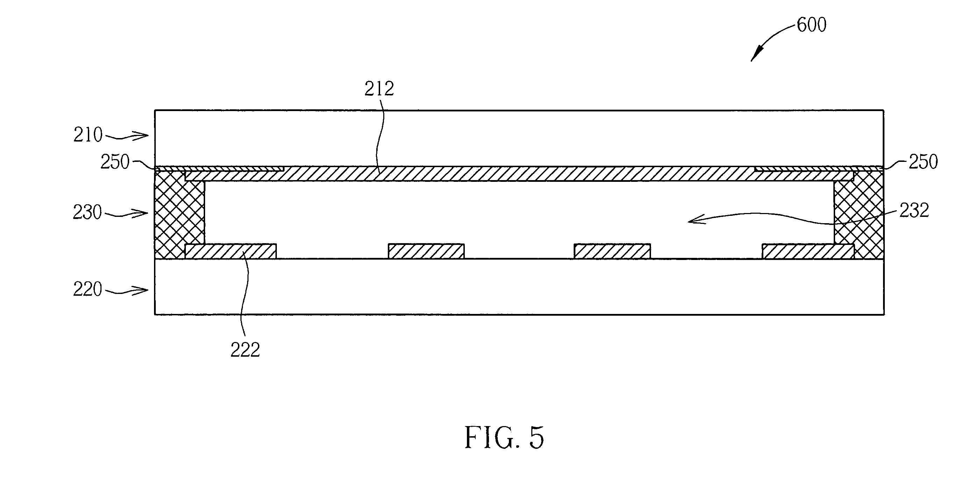

Please refer to FIG. 5, which shows a diagram of another capacitive touch panel 600 of the present invention. As shown in FIG. 4, besides the first substrate 210, the second substrate 220, the spacer 230, the capacitive touch panel 600 further comprises a decoration layer 250 formed on peripheral of the lower surface of the first substrate 210 for covering elements installed at the edges of the capacitive touch panel 600. In addition, ends of the plurality of first conductive stripes 212 are arranged on the decoration layer 250, such that connection parts between the first conductive stripes 212 and other signal lines can be covered. According to the arrangement in shown FIG. 5, usage of the optical clear adhesive is reduced since the capacitive touch panel 600 of the present invention does not need an extra decoration plate to cover the elements installed at the edges of the capacitive touch panel 600.

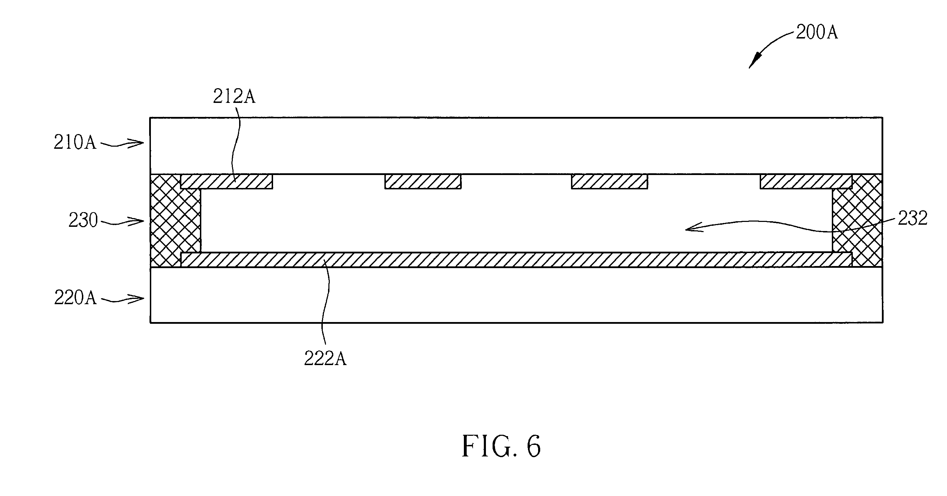

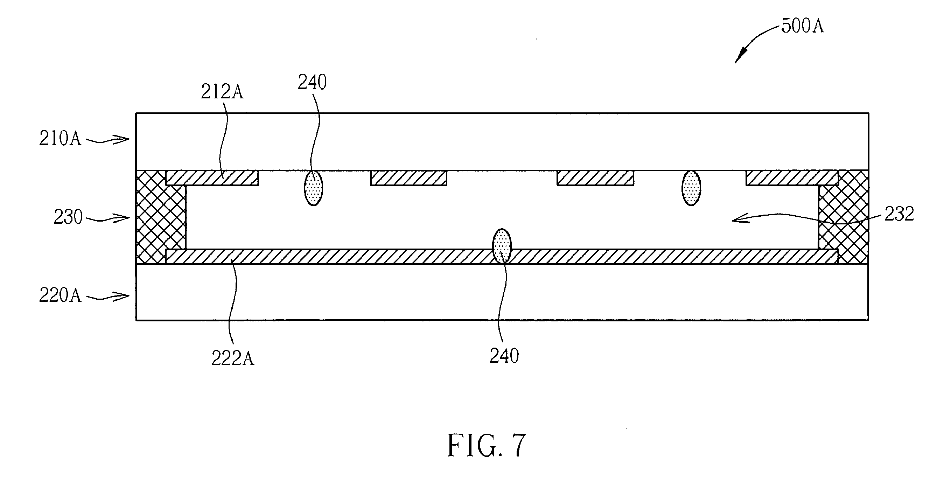

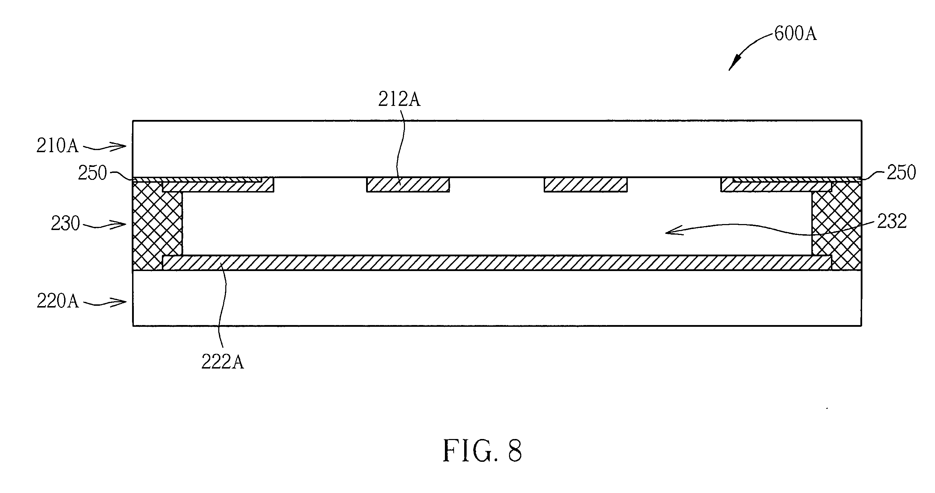

Please refer to FIG. 6 to FIG. 8, and refer to FIG. 2, FIG. 4 and FIG. 5 as well. FIG. 6 is a diagram showing another embodiment of a capacitive touch panel 200A of the present invention corresponding to FIG. 2, FIG. 7 is a diagram showing another embodiment of a capacitive touch panel 500A of the present invention corresponding to FIG. 4, and FIG. 8 is a diagram showing another embodiment of a capacitive touch panel 600A of the present invention corresponding to FIG. 5. As shown in the figures, first conductive stripes 212A are formed on the lower surface of the first substrate 210A along the second direction, and second conductive stripes 222A are formed on the upper surface of the second substrate 220A along the first direction.

In the above embodiments, the first direction is perpendicular to the second direction. But in other embodiments, the first direction is not necessary to be perpendicular to the second direction, the first direction and the second direction can be any combination of directions different from each other.

In addition, in the above embodiments, the first substrate 210, 210A can be a glass substrate or a plastic substrate. The first substrate 210, 210A can be made of acrylic, polymethyl methacrylate (PMMA), polyethylene terephthalate (PET) or polycarbonate. The second substrate 220, 220A can be a glass substrate or a plastic film. The second substrate 220, 220A can be made of acrylic, polymethyl methacrylate (PMMA), polyethylene terephthalate (PET) or polycarbonate. The conductive stripes 212, 212A, 222, 222A are transparent conductive stripes, which can be made of indium tin oxide, transparent conductive polymer film, or transparent metalloid film. The gas filled in the gap 232 may comprise air and/or inactive gas, such as Helium, Neon, Argon, Krypton and/or Xenon. Moreover, the gas filled in the gap 232 can comprise gas other than air and/or inactive gas. The filled gas of the gap not only can decrease the response time of the capacitive touch panel, but can also reduce interference.

In contrast to the prior art, the capacitive touch panel of the present invention utilizes gas, which has lower dielectric constant, as an insulator between the first conductive stripe along the first direction and the second conductive stripe along the second direction, in order to reduce the response time of the capacitive touch panel as well as interference.

**Claims**

1.    A capacitive touch panel (200, 200A, 500, 500A, 600, 600A) capable of decreasing response time and reducing interference, the capacitive touch panel (200, 200A, 500, 500A, 600, 600A) comprising:

    a first substrate (210, 210A) having a plurality of first conductive stripes (212, 212A) formed on a lower surface of the first substrate (210, 210A) along a first direction;
    a second substrate (220, 220A) disposed below the first substrate (210, 210A), having a plurality of second conductive stripes (222, 222A) formed on a upper surface of the second substrate (220, 220A) along a second direction; and
    **characterized by**:

        a spacer (230) arranged between the first substrate (210, 210A) and the second substrate (220, 220A) for forming a gap (232) between the first substrate (210, 210A) and the second substrate (220, 220A).

2.    The capacitive touch panel of claim 1, **characterized in that** the first and second conductive stripes (212, 212A, 222, 222A) are transparent conductive stripes made of indium tin oxide, transparent conductive polymer film, or transparent metalloid film.

3.    The capacitive touch panel of claim 1, **characterized in that** the spacer (232) is arranged in edges of the capacitive touch panel (200, 200A, 500, 500A, 600, 600A).

4.    The capacitive touch panel of claim 3 further **characterized by** a plurality of spacing dots (240) arranged in an inner side of the spacer (230), the spacing dots (240) being arranged in any shape.

5.    The capacitive touch panel of claim 3, **characterized in that** the spacer (230) encloses the capacitive touch panel (200, 200A, 500, 500A, 600, 600A) along the edges of the capacitive touch panel (200, 200A, 500, 500A, 600, 600A).

6.    The capacitive touch panel of claim 1, **characterized in that** the first substrate (210, 210A) is a glass substrate.

7.    The capacitive touch panel of claim 1, **characterized in that** the first substrate (210, 210A) is a plastic substrate made of acrylic, polymethyl methacrylate (PMMA), polyethylene terephthalate (PET) or polycarbonate.

8.    The capacitive touch panel of claim 1, **characterized in that** the second substrate (220, 220A) is made of glass, acrylic, polymethyl methacrylate (PMMA), polyethylene terephthalate (PET) or polycarbonate.

9. The capacitive touch panel of claim 1, **characterized in that** the gap (232) is filled with gas.

10. The capacitive touch panel of claim 9, **characterized in that** the gas filled in the gap (232) comprises air.

11. The capacitive touch panel of claim 9, **characterized in that** the gas filled in the gap (232) comprises inactive gas.

12. The capacitive touch panel of claim 11, **characterized in that** the inactive gas comprises Helium, Neon, Argon, Krypton and/or Xenon.

13. The capacitive touch panel of claim 1 further **characterized by** a decoration layer (250) formed on the periphery of the lower surface of the first substrate (210, 210A) for covering elements installed at edges of the capacitive touch panel (600, 600A).

14. The capacitive touch panel of claim 13, **characterized in that** ends of the plurality of first conductive stripes (212, 212A) are arranged on the decoration layer (250).

EP 2 508 967 A2

110

Optical clear
adhesive

122

120

Optical clear
adhesive

132

130

100

FIG. 1 PRIOR ART

FIG. 2

EP 2 508 967 A2

EP 2 508 967 A2

FIG. 3

FIG. 4

FIG. 5

EP 2 508 967 A2

200A

232

212A

222A

210A

230

220A

FIG. 6

FIG. 7

FIG. 8

EP 2 508 967 A2